# EUROPEAN PATENT APPLICATION

(11) **EP 4 811 580 A1**
(43) Date of publication of application: **23.09.2026**
(21) Application number: 25165203.8
(22) Date of filing: 21.03.2025
(51) Int. Cl.: H02J 1/14, C25B 15/02, H02J 3/18

(54) **METHOD OF OPERATING AN ELECTROLYSIS SYSTEM, CONTROL UNIT TO CONTROL AN ELECTROLYSIS SYSTEM, ELECTROLYSIS SYSTEM WITH SUCH A CONTROL UNIT, COMPUTER PROGRAM PRODUCT AND A COMPUTER-READABLE STORAGE MEDIUM**

(71) Applicant: Siemens Energy Global GmbH & Co. KG, 81739 München (DE)
(72) Inventor: Craciun, Bogdan, 91052 Erlangen (DE); Schumann, Sven, 91452 Wilhermsdorf (DE)

(57) **Abstract**

Method of operating an electrolysis system (2) where-in the method comprising the steps of:
(S100) reading in a signal (S) for a faulty stack (12),
(S200) providing a control signal (CS1) in order to bypass the faulty stack (12),
(S300) providing a second control signal (CS2) in order to provide a first voltage adapted to the n-1 row (6b) with the faulty stack (12), and
(S400) providing a third control signal (CS3) in order to provide a second voltage adapted to the n row (6a) without the faulty stack (12).

## Description

The present disclosure in general relates to a method of operating an electrolysis system, a control unit to control such an electrolysis system, and an electrolysis system with such a control unit. Further, the present disclosure relates to a computer program product and a computer-readable storage medium.

Electrolysis is a process used for producing hydrogen by using electricity to split water into hydrogen and oxygen. Green hydrogen production, i.e., the production of hydrogen using renewable energy, such as electrical energy generated using wind turbines or photovoltaic systems, is increasing due to efforts to de-carbonize energy production. Therefore, the number of installed electrolysis systems connected to transmission networks for electrical energy, e.g., alternating current (AC) power grids, continuously increases. Some electrolysis systems are connected to renewable energy sources via medium voltage links.

Reliability in the hydrogen plant is a constant concern and research activities are ongoing to improve the reliability of the stacks especially PEM which present more sensitive behaviour due to the size of the PEM membrane. Based on the different configurations in terms of the stack size in the end the stack will consists of several stacks connected in series. To scale up the systems and reach economy of scale, several stacks can be connected in series and in this way increase the volume of hydrogen produced.

In a normal configuration an array consists of several rows of electrolyser stacks and operated more or less in a synchronous manner. In this multi row and multi array configuration the stacks can be loaded based on the load profile desired and in an ideal case all the stacks will reach their end of life in a matter of years.

Due to different causes such as quality of manufacturing, operation, grid conditions the stacks might experience increased ageing or in some events even rupture or meltdown in the stacks itself. In this situation, the entire array or row needs to be stopped immediately and the problem resolved since the mix of gases can reach a hazardous state. For this procedure usually the system is purged, and the system is flushed with inert gas such as nitrogen. Once this activity is ended replacement produces of the stacks take place and the initial state of the row is restored.

In terms of alkaline which are made from single units a catastrophic failure inside the stack would mean that the entire unit (typically 5 - 10 MW) needs to be stopped, and equipment needs to be exchanged.

In case of PEM electrolysis, the stacks are smaller, and they can be put in series to reach a certain power level. The number of stacks is also critical since if this number is low this means that the unit must be stopped as well.

The normal procedure in case of stack failure so far was to stop the unit and exchange the faulty stack. That could impact a ~20 MW unit overall and cause substantial loss in hydrogen production.

It is therefore an objective of the present invention to improve an electrolysis system in case of a faulty stack.

This objective is solved by a method of operating an electrolysis system as stated in claim 1, a control unit to control an electrolysis system as stated in claim 5, an electrolysis system with such a control unit as stated in claim 9, a computer program product as stated in claim 10 and a computer-readable storage medium as stated in claim 11. Advantageous additional embodiments of the invention are disclosed in the respective dependent claims.

According to a first aspect of the invention, a method of operating an electrolysis system comprises the steps of:
reading in a signal for a faulty stack,
providing a control signal in order to bypass the faulty stack,
providing a second control signal in order to provide a first voltage adapted to the n-1 row with the faulty stack, and
providing a third control signal in order to provide a second voltage adapted to the n row without the faulty stack.

Thus, after detecting and reading in the signal of a faulty stack the provided control signal will establish electrical temporary busbar connections, which bypassed the faulty stack. Further, connections to the process side for water, cooling, and gas circuit can either be connected by temporary tubes or be sealed.

Further, in a first stage, after disconnecting the electrolysis system from a grid, a first voltage adapted to the n-1 row with the faulty stack will be provided. Therefore, the second control signal will be provided. There are several ways on how to provide the first voltage, which will be described later on.

Since the n-1 row of stacks are supplied with the first voltage and the n-1 row of stacks are back in service, in a second stage, the second voltage adapted to the n row without the faulty stack is provided. Thus, now the rest of the row of stacks, the n row without the faulty stack are supplied with the second voltage and the n row of stacks are back in service.

An active method of operating the electrolyser system is provided if a sufficient number of stacks are in the n row to continue the operation even in the extreme case the stack is completely removed from the n row. The method of operating the electrolyser system is applicable for all types of grid connections and addresses all the types of grids available. The method of operating the electrolyser system provides a competitive advantage in terms of maintainability and hydrogen availability in case catastrophic failures internally in the stack which might come in consecutive manner and spare parts are not available.

In an embodiment of the method, the second control signal are provided to an energy management system (EMS).

The energy management system (EMS) controls an island grid, and therefore the voltage level provided by the island grid and common bus (MV, HV or LV). This means that the energy management system (EMS) adjusts the voltage level accordingly to the needs of the n-1 row. However, this is not an issue for the n row since the power supply, for example an IGBT power supply, operates in a boost mode. The voltage level adjusted by the energy management system (EMS) can go down in the range of 0% to 15%. The energy management system (EMS) adjusts the voltage level up to a minimum level without exceeding this, otherwise the rest of the stacks will enter into a fault mode (low-voltage-ride-through - LVRT), which would cause an interruption of gas production. Once the voltage reaches the first voltage of the n-1 row, the n-1 row will be connected and the electrolyser system starts the ramping process of the minimum loading.

Once the connection of the n-1 row is done the inverse procedure is performed in order to bring the voltage level to the second voltage so the entire island grid operates in the rated point.

In an embodiment of the method, the second control signal is provided to a switching means configured to reduce a voltage level of the second voltage to the first voltage.

The switching means can be an on-load tap changer (OLTC), arranged between a public grid and a central transformer of the electrolyser system, or the switching means can be an additional tap changer of a transformer.

The on-load tap changer (OLTC) can control and thus reduce the voltage in an internal MV grid in order to facilitate a voltage decrease. Instead of the on-load tap changer (OLTC) another semi-conductor-based device with the same capability to adjust the transformer's output voltage / transformer ratio can be used.

Also, the additional tap position allows to reduce the voltage. The tap position is activated as a first measure to reduce the voltage input. Further measures are explained later on.

Thus, the second controls signal activates the switching means, e.g., the on-load tap changer or tap changer, to change the voltage level from the first voltage to the second voltage.

In an embodiment of the method, the second control signal is provided to a plant controller in order an increase a reactive power absorbed by the electrolysis system.

Again, the electrolysis system is connected to a public grid. However, no switching means, like on-load tap changer or tap changer, are provided.

For example, the power supply, for example an IGBT power supply, can enter into a static-synchronous-compensator-mode (STATCOM-mode) absorbing reactive power from the public grid in order to level the public grid from the second voltage to the first voltage. This means that, for example, a parallel configuration of, for example IGBTs, is capable to adjust the voltage level at the point where the electrolysis is connected by adjusting its reactive power settings independently from its active power setpoints.

In the event this is still not sufficient the energy management system (EMS) is informed and will enter into the reactive power management and deploy the reactive power reserves by means of enabling them from other converter interfaced renewables or other converters, for example VSC converters, like IGBT converters, interfaced electrolyser arrays in the vicinity, for example parallel electrolysis units connected to the same MV bus.

Thus, since the voltage level does not meet the first voltage needed by the n-1 row, a plant controller deploys the reactive power needed present in the plant by other converters, for example VSC converters, like IGBT converters, interfaced electrolyser arrays or other compensation equipment. Once the voltage is restored, the inverse procedure is activated to bring the voltage to its rated initial state.

According to a second aspect of the invention, a control unit is provided. The control unit for an electrolysis system is configured to read in a signal for a faulty stack, to provide a control signal in order to bypass the faulty stack, to provide a second control signal in order to provide a first voltage adapted to the n-1 row with the faulty stack, and to providing a third control signal in order to provide a second voltage adapted to the n row without the faulty stack.

According to a third aspect of the invention, an electrolysis system with such a control unit is provided.

According to a fourth aspect of the invention, a computer program product comprises code portions that, when executed on a programmable apparatus, for example on the control unit, enable the programmable apparatus to carry out steps of a method according to the first aspect of the invention. And according to a fifth aspect of the invention, a computer readable storage medium comprises a computer program product according to the second aspect of the invention.

The programmable apparatus may be a computer or a pro-cessing control unit comprising a processor and a memory and an interface for receiving measured values and parameter settings. The computer program product corresponds to a computer program, at least including software code portions for performing steps of the method according to the invention when run on a programmable apparatus, for enabling the programmable apparatus to per-form functions according to the invention. The computer program may be provided on a computer readable storage medium, i.e., a data carrier, such as a CD, DVD, memory card or other storage medium, stored with data loadable in a memory of the programmable apparatus, wherein the data represents the computer program. As another example, the data carrier may further be a data connection, such as a telephone cable or data cable or a wireless connection.

While not explicitly described, the presented embodiments may be employed in any combination or sub-combination.

The properties, features, and advantages of the invention described above, and the manner in which they are achieved, will become clearer and more clearly understood in connection with the following description of the exemplary embodiments, which are explained in more detail in connection with the drawings, wherein
Fig. 1 schematically shows an example of an electrolysis system;
Fig. 2 schematically shows the electrolysis system with a faulty stack;
Fig. 3 schematically shows different current-voltage-curves; and
Fig. 4 schematically shows an example of a flowchart of operating the electrolysis system shown in Fig. 1 and 2.

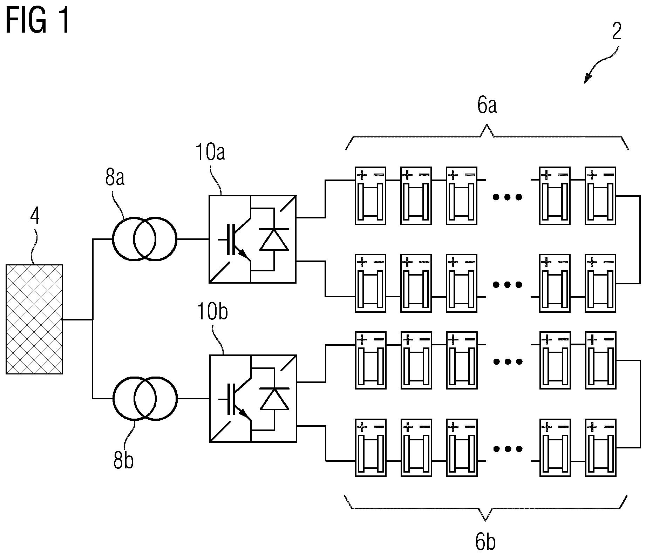

In Fig.1, an example of an electrolysis system 2 is schematically illustrated.

The shown electrolysis system 2 is connected to a grid 4, in the present example an AC grid.

Further, in the present example, the electrolysis system 2 with a standard IGBT based power supply architecture comprises two rows 6a, 6b, each of a plurality of stacks. However, the number of stacks can be higher.

To each row 6a, 6b a rectifier transformer 8a, 8b is assigned, having their primary sides connected to the AC grid 4, and their secondary sides connected to thyristor rectifier circuits 10a, 10b, which connect with their DC output sides to the two electrolyser rows 6a, 6b. The electrolyser stack modules can be PEM or alkaline stack modules.

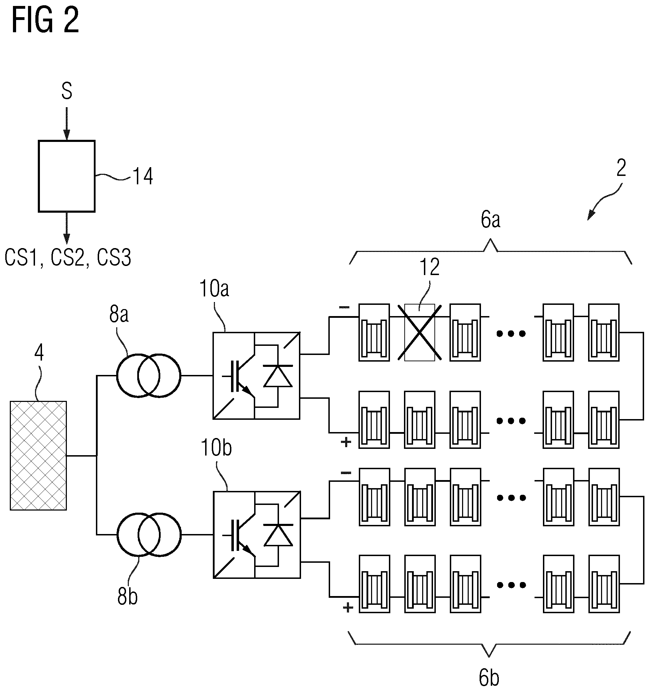

In Fig. 2, the electrolysis system 2 is shown with a faulty stack 12 of the first row 6a.

Since in the present example, the number of stacks in the rows 6a, 6b is more than 7, the faulty stack 12 can be removed.

Therefore, a control unit 14 of the electrolysis system 2 provides a control signal CS1 in order to bypass the faulty stack 12 after the control unit 14 read in a signal S for the faulty stack 12. Thus, the faulty stack 12 is now bypassed with a temporary busbar connection (not shown). Further, in the present embodiment, connections on the process side, for example for water circuit / cooling, and gas handling are also sealed. However, they can also be in an open state.

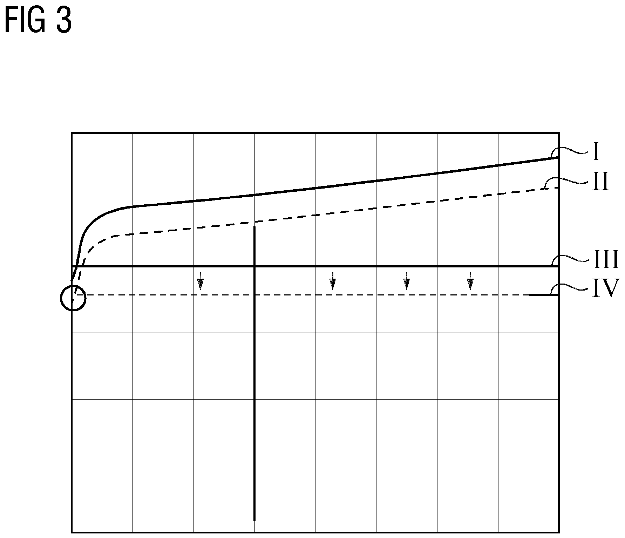

In Fig. 3, different current-voltage-curves I, II, III, and IV are schematically shown.

The first current-voltage-curve I is a current-voltage-curve for a n-1 row 6b without any faulty stack 12, the second current-voltage-curve II is a current-voltage-curve for a n row 6a with the faulty stack 12, and the third current-voltage-curve III is a current-voltage-curve of the grid 4 after rectification of the voltage with the thyristor rectifier circuits 10a, 10b.

The fourth current-voltage-curve IV is a current-voltage-curve for the n-1 row 6a with the faulty stack 12, which the power supply needs to cope with.

Therefore, the control unit 14 of the electrolysis system 2 provides a second control signal CS2 in order to provide a first voltage adapted to the n-1 row 6b with the faulty stack 12. Since the number of stacks of the n-1 row 6a is by 1 smaller than the number of the stacks of the n row 6b, the first voltage is lower, according to the second current-voltage-curve II about a voltage drop over of one stack of the rows 6a, 6b.

According to a first embodiment, the control unit 14 is configured to provide the second control signal CS2 to an energy management system (EMS) (not shown).

The energy management system (EMS) controls in the first embodiment an island grid 4, which supplies to the electrolysis system 2 electrical energy. Upon receiving the second control signal CS2, the energy management system (EMS) adjusts the voltage of the island grid 4 to the level of first voltage for the n-1 row 6a.

However, this is not an issue for the n row 6b since the power supply, for example an IGBT power supply, operates in a boost mode. The first voltage adjusted by the energy management system (EMS) can go down in the range of 0% to 15%. Thus, the energy management system (EMS) can compensate one faulty stack 12 of a row 6a with at least 7 stacks.

Moreover, the energy management system (EMS) adjusts the first voltage up to a minimum level. Further, the energy management system (EMS) keeps the first voltage at least at that minimum level for the first voltage in order to prevent that the n row 6b will enter into a low-voltage-ride-through fault (LVRT), which would cause an interruption of gas production.

If the energy management system (EMS) fails to adjust the first voltage up to the minimum level, the energy management system (EMS) is configured to enter into a reactive power management and deploy the reactive power reserves by means of enabling them from other converter interfaced renewables or other converters, for example VSC converters, like IGBT converters, interfaced electrolyser arrays in the vicinity, for example parallel electrolysis units connected to the same MV bus.

Further, as a second measure, the energy management system (EMS) or a plant controller (not shown) deploys the reactive power needed present in the electrolysis system 2 by other converters, for example VSC converters, like IGBT converters, interfaced electrolyser arrays or other compensation equipment.

Thus, once the voltage reaches the first voltage of the n-1 row 6a, the n-1 row 6a will be connected to the grid 4 and the electrolyser system 2 starts a ramping process of the minimum loading.

The control unit 14 provides a third control signal CS3 to the energy management system (EMS) in order to provide a second voltage adapted to the n row 6b without the faulty stack 12.

Once the connection of the n-1 row 6b is done an inverse procedure is performed in order to bring the voltage to the second voltage so the entire island grid 4 operates in the rated point.

According to a second embodiment, the control unit 14 is configured to provide the second control signal CS2 to a switching means (not shown) configured to reduce a voltage from the second voltage to the first voltage.

The switching means can be an on-load tap changer (OLTC) (not shown), arranged between the grid 4, in the present example a public grid, and a transformer, for example the rectifier transformer 8a, 8b, of the electrolyser system 2, or the switching means can be an additional tap changer (not shown) of a transformer, for example the rectifier transformer 8a, 8b.

Upon receiving the second control signal CS2 the on-load tap changer (OLTC) controls and thus reduces the second voltage to the first voltage. Also, upon receiving the second control signal CS2, the additional tap position reduces the second voltage to the first voltage.

Thus, the second controls signal CS2 activates the switching means, **e.g.,** the on-load tap changer or tap changer, to change the voltage from the second voltage to the first voltage of the public grid 4.

Again, the control unit 14 provides the third control signal CS3 to the switching means in order to provide a second voltage adapted to the n row 6a without the faulty stack 12.

If the plant controller fails to adjust the voltage up to the minimum level, the plant controller is configured to enter into the reactive power management and deploy the reactive power reserves by means of enabling them from other converter interfaced renewables or other converters, for example VSC converters, like IGBT converters, interfaced electrolyser arrays in the vicinity, for example parallel electrolysis units connected to the same MV bus.

Further, as a second measure, the plant controller deploys the reactive power needed present in the plant by other converters, for example VSC converters, like IGBT converters, interfaced electrolyser arrays or other compensation equipment.

Further, once the connection of the n-1 row 6b is done the inverse procedure is performed in order to bring the voltage to the second voltage.

According to a third embodiment, the control unit 14 is configured to provide the second control signal CS2 to a plant controller in order an increase a reactive power absorbed by the electrolysis system 2.

As in the second embodiment, in the third embodiment the electrolysis system 2 is connected to a public grid 4. However, no switching means, like on-load tap changer or tap changer, are provided.

Upon receiving the second control signal CS2, the power supply, (not shown), for example an IGBT power supply, can enter into a static-synchronous-compensator-mode (STATCOM-mode) absorbing reactive power from the public grid 4 in order to level the public grid 4 to the first voltage. Therefore, a parallel configuration of, for example IGBTs, is capable to adjust the voltage level to the first voltage.

In the event this is still not sufficient, the energy management system (EMS) is informed and will enter into a reactive power management and deploy the reactive power reserves by means of enabling them from other converter interfaced renewables or other converters, for example VSC converters, like IGBT converters, interfaced electrolyser arrays in the vicinity, for example parallel electrolysis units connected to the same MV bus.

Thus, since the voltage does not meet the voltage level needed by the n-1 row, a plant controller deploys the reactive power needed in the electrolysis system 2 by other converters, for example VSC converters, like IGBT converters, interfaced electrolyser arrays or other compensation equipment. Once the voltage is restored, the inverse procedure is activated to bring the voltage to its rated initial state, e.g., the second voltage.

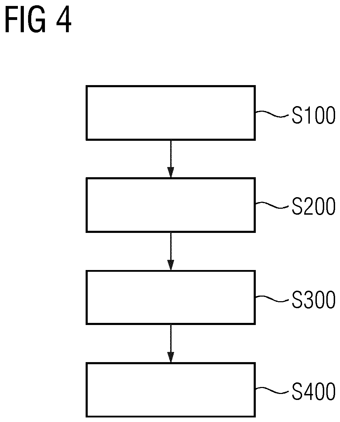

In Fig. 4, an example of a flowchart of operating the electrolysis system 2 is shown.

In a first step S100, for example the control unit 14 reads in the signal S for a faulty stack 12.

In a next step S200, for example the control unit 14 provides the control signal CS1 in order to bypass the faulty stack 12.

In a next step S300, for example the control unit 14 provides the second control signal CS2 in order to provide the first voltage adapted to the n-1 row 6a with the faulty stack 12.

According to the first embodiment, the second control signal CS2 will be provided to the energy management system (EMS) of an island grid 4.

If the energy management system (EMS) fails to adjust the voltage up to a minimum level, the energy management system (EMS) is configured to enter into the reactive power management and deploy the reactive power reserves by means of enabling them from other converter interfaced renewables or other converters, for example VSC converters, like IGBT converters, interfaced electrolyser arrays in the vicinity, for example parallel electrolysis units connected to the same MV bus.

Further, as a second measure, the energy management system (EMS) or an electrolyser plant controller deploys the reactive power needed present in the electrolysis system 2 by other converters, for example VSC converters, like IGBT converters, interfaced electrolyser arrays or other compensation equipment.

According to the second embodiment, the second control signal CS2 will be provided to the switching means configured to reduce the voltage from a level of the second voltage to a level of the first voltage.

If the plant controller fails to adjust the voltage up to the minimum level, the plant controller is configured to enter into the reactive power management and deploy the reactive power reserves by means of enabling them from other converter interfaced renewables or other converters, for example VSC converters, like IGBT converters, interfaced electrolyser arrays in the vicinity, for example parallel electrolysis units connected to the same MV bus.

Further, as a second measure, the electrolyser plant controller deploys the reactive power needed present in the plant by other converters, for example VSC converters, like IGBT converters, interfaced electrolyser arrays or other compensation equipment.

According to the third embodiment, the second control signal CS2 will be provided in order to increase the reactive power absorbed by the electrolysis system 2.

In a next step S400, for example the control unit 14 provides the third control signal CS3 in order to provide a second voltage adapted to the n row 6b without the faulty stack 12.

Those skilled in the art will recognize that the boundaries between blocks are merely illustrative and that alternative embodiments may merge blocks or impose an alternative composition of functionality upon various blocks. It should be noted that, depending on the embodiment, method steps, although described and illustrated according to a certain sequence or order of steps, may at least partly be carried out in a different order or simultaneously. Other steps may be added and certain steps de-scribed here may be left out.

Although the invention has been illustrated and described in detail by the shown preferred embodiments, the invention is not limited by the disclosed examples and other variations can be derived therefrom by those skilled in the art without departing from the scope of the invention.

## Claims

1. Method of operating an electrolysis system (2) wherein the method comprising the steps of:
(S100) reading in a signal (S) for a faulty stack (12),
(S200) providing a control signal (CS1) in order to bypass the faulty stack (12),
(S300) providing a second control signal (CS2) in order to provide a first voltage adapted to the n-1 row (6b) with the faulty stack (12), and
(S400) providing a third control signal (CS3) in order to provide a second voltage adapted to the n row (6a) without the faulty stack (12).

2. The method as claimed in claim 1, wherein the second control signal (CS2) is provided to an energy management system (EMS).

3. The method as claimed in claim 1 or 2, wherein the second control signal (CS2) is provided to a switching means configured to reduce a voltage level from the second voltage to the first voltage.

4. The method as claimed in claim 1, 2 or 3, wherein the second control signal (CS2) is provided to a plant controller in order an increase a reactive power absorbed by the electrolysis system (2).

5. Control unit (14) for an electrolysis system (2), wherein the control unit (14) is configured to read in a signal (S) for a faulty stack (12), to provide a control signal (CS1) in order to bypass the faulty stack (12), to provide a second control signal (CS2) in order to provide a first voltage adapted to the n-1 row (6a) with the faulty stack (12), and to providing a third control signal (CS3) in order to provide a second voltage adapted to the n row (6b) without the faulty stack (12).

6. Control unit (14) as claimed in claim 5, wherein the control unit (14) is configured to provide the second control signal (CS2) to an energy management system (EMS).

7. Control unit (14) as claimed in claim 5 or 6, wherein the control unit (14) is configured to provide the second control signal (CS2) to a switching means configured to reduce a voltage level from the second voltage to the first voltage.

8. Control unit (14) as claimed in claim 5, 6 or 7, wherein the control unit (14) is configured to provide the second control signal (CS2) to a plant controller in order increase a reactive power absorbed by the electrolysis system (2).

9. Electrolysis system (2) with a control unit (14) as claimed in any of the claims 5 to 8.

10. Computer program product, comprising code portions that, when executed on a programmable apparatus, enable the control unit (14) to carry out steps of a method according to any of the claims 1 to 4.

11. Computer readable storage medium, comprising a computer program product according to claim 10.
